# EUROPEAN PATENT APPLICATION

(11) **EP 2 733 600 A2**
(43) Date of publication of application: **21.05.2014**
(21) Application number: 13192677.6
(22) Date of filing: 13.11.2013
(51) Int. Cl.: G06F 3/12

(54) **Print processing apparatus and method**

(30) Priority: 16.11.2012 JP 2012252624
(71) Applicant: Ricoh Company, Ltd., Tokyo 143-8555 (JP)
(72) Inventor: Nishida, Takeshi, Tokyo, 143-8555 (JP)
(74) Representative: Schwabe - Sandmair - Marx

(57) **Abstract**

The present invention provides a print processing apparatus (1) that has a printer (4) execute printing in response to a request to print from an external apparatus (3) connected via a network (2) and includes a browser language information acquisition unit that acquires browser language information that indicates language setting of a web browser in the external apparatus in case of receiving a request to print offline from the external apparatus (3) and a print language setting unit that sets print language used in printing in response to the request to print offline based on the acquired browser language information. The present invention also provides a print processing system that includes the print processing apparatus (1), the printer (4), and the external apparatus (3) connected via the network (2).

## Description

### BACKGROUND

### Technical Field

The present invention relates to a print processing apparatus and print processing method.

### Background Art

In print systems that include a print server (Digital Front End (DFE)), a new technology that supports offline printing (e.g., printing of internal settings, interface settings, and administrative reports) in multiple languages and executes printing in a language that a user intends is becoming necessary. Especially in Europe, since it is easy to move among different countries each using a different language, it is critical to be able to change the print language used in multilingual offline printing easily.

However, in conventional offline printing, since printing is performed using the same language as that displayed at the print server, the user needs to change the display language of the print server before printing if the user intends to perform offline printing in a language different from the display language of the print server. Therefore, setting the intended print language is not easy.

Technologies that support multilingual offline printing have been proposed in which, if it is requested to print out text from a client terminal on a network, the language is set using a language setting for the Operating System (OS) of the terminal (e.g., JP-2005-196397-A). Consequently, in case of displaying a user interface and printing out an administrative report etc., usability for multilingualization can be improved.

### SUMMARY

Example embodiment of the present invention provides a print processing apparatus that has a printer execute printing in response to a request to print from an external apparatus connected via a network and includes a browser language information acquisition unit that acquires browser language information that indicates language setting of a web browser in the external apparatus in case of receiving a request to print offline from the external apparatus and a print language setting unit that sets print language used in printing in response to the request to print offline based on the acquired browser language information.

Example embodiment of the present invention includes a system that includes the print processing apparatus, the printer, and the external apparatus that communicates with the print processing apparatus.

Example embodiment of the present invention includes a print processing method executed by the print processing apparatus that has the printer execute printing in response to a request to print sent from the external apparatus connected via a network, and a non-transitory recording medium storing a program that causes the computer to implement the print processing method.

Consequently, the user can easily configure the print language of offline printing as intended.

### BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.
FIG. 1 is a diagram illustrating an environment in which a print processing apparatus is used as an embodiment of the present invention.
FIG. 2 is a block diagram illustrating part of a print server shown in FIG. 1 as an embodiment of the present invention.
FIG 3 is a diagram illustrating a data format in accordance with a request to print offline as an embodiment of the present invention.
FIGS. 4A, 4B, 4C, and 4D are diagrams illustrating print item lists as an embodiment of the present invention.
FIGS. 5A and 5B are diagrams illustrating internal configuration data as embodiments of the present invention.
FIG. 6 is a flowchart illustrating a process of printing offline as an embodiment of the present invention.
FIG 7 is a diagram illustrating a result of printing offline as an embodiment of the present invention.

### DETAILED DESCRIPTION

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

In conventional printing systems, since the language setting of the OS of the client terminal is fixed by the OS, it is difficult to perform offline printing in the intended language. Generally, since the OS of the client terminal is in the native language of the user, print language for offline printing is fixed to the native language of the user who uses the client terminal. Therefore, if the language setting for the OS of the client terminal is used in performing printing in other countries, the print language for offline printing is fixed to the native language of the user who uses the client terminal, and it is not possible to perform printing in other languages.

Consequently, if the intended language is different from the language setting for the OS of the client terminal, it is difficult to support printing in the intended language since it is necessary either to change the language setting of the OS or add an OS for another language in order to support printing in the intended language. That is, in case of default installation of the OS, it is not possible to change the language setting, and it is necessary to install an additional package, etc. In addition, if the language setting of the OS is changed, the language setting for all functions of the OS is changed too.

There exist two scenarios in which the intended language is different from the language setting of the OS of the client terminal in case of printing in other countries. In one case, the user moves to another country with the client terminal, and the user performs printing in that country's language. In the other case, the user operates the client terminal located in another country and performs printing in the user's own language.

The following embodiment facilitates changing the print language for offline printing in the intended language.

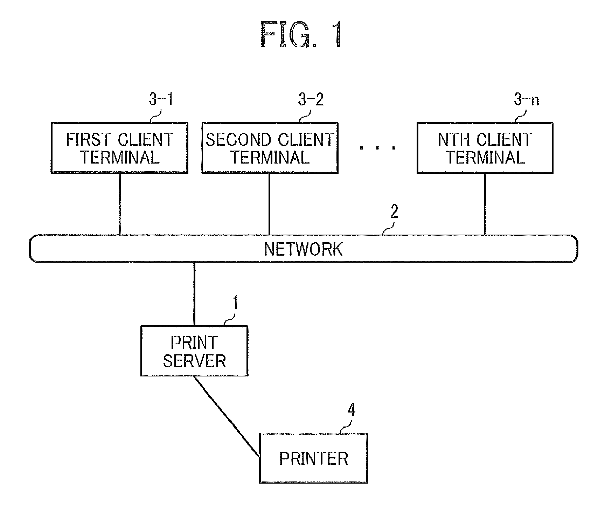

FIG. 1 is a diagram illustrating an environment in which a print processing apparatus is used. As shown in FIG. 1, a print server I as a print processing apparatus is connected to a printer 4. Also, the print server 1 is connected to client terminals from 3-1 to 3-n (n is an integer larger than 3) as external apparatuses via a network 2 such as LAN. The print server 1 and the printer 4 comprise a printing system. The connection between the print server 1 and the printer 4 is compliant with their specifications. Also, the printer 4 is capable of working as the print server 1.

The client terminals from 3-1 to 3-n are mobile or desktop information communications terminal apparatuses capable of processing information and communicating such as a personal computer and a tablet terminal.

The print server 1 is a computer that implements a program (print processing program) that enables the client terminals from 3-1 to 3-n to share the printer 4.

After a request to print online is sent from the client terminals from 3-1 to 3-n, the print server 1 has the printer 4 perform printing based on print data in accordance with the request to print. This is standard online printing.

Alternatively, after receiving a request to print offline sent from the client terminals from 3-1 to 3-n, the print server 1 has the printer 4 perform printing offline based on print data in accordance with the request to print.

Offline printing is printing other than online printing described above. In other words, offline printing is printing other than printing based on print data sent from the client terminals from 3-1 to 3-n. Examples of offline printing is printing based on information configured in the print server and printing based on information managed by the print server 1. In addition, printing based on data that the print server 1 acquires from an external file server (not shown in figures) in response to a request to print from the client terminals from 3-1 to 3-n is also offline printing.

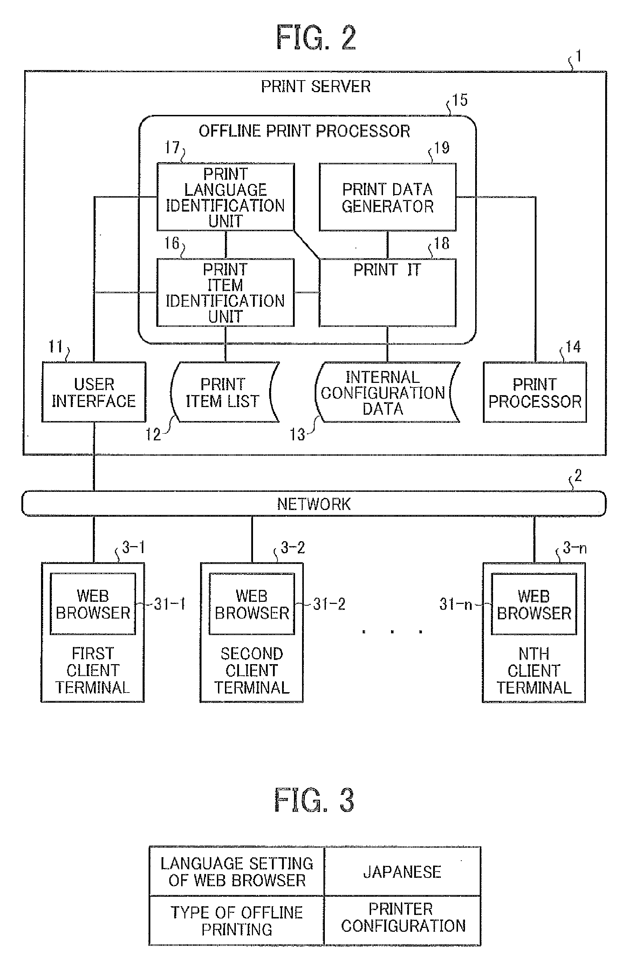

FIG. 2 is a block diagram illustrating part of the print server 1 shown in FIG. 1. As shown in FIG. 2, the print server 1 includes a user interface 11, a print item list 12, internal configuration data 13, a print processor 14, and an offline print processor 15. In FIG. 2, only elements related to the present invention are shown, and other elements generally included in a print server are omitted.

In FIG. 2, the user interface 11. the print processor 14, and the offline print processor 15 are functional blocks. These functional blocks are implemented by loading a print processing program stored in a ROM or a hard disk drive (HDD) into a RAM, executing it, and controlling a network interface and a printer interface by a CPU in the print server 1. The print item list 12 and the internal configuration data 13 are stored in the HDD in the print server 1.

The user interface 11 provides a user interface (UI) to web browsers from 31-1 to 31-n on the client terminals from 3-1 to 3-n via the network 2 and exchanges data with the client terminals.

The print item list 12 is a list of items to be printed for each type of offline printing. The internal configuration data 13 indicates configuration values in the print server 1.

The print processor 14 converts print data generated by a print data generator 19 into bitmap (RIP processing) and manages printing by sending the bitmap to the printer 4 and having the printer 4 execute printing.

The offline print processor 15 includes a print item identification unit 16, a print language identification unit 17, a print information acquisition unit 18, and the print data generator 19.

The print item identification unit 16 identifies print items in accordance with "type of offline printing" included in data accompanying the request to print offline sent from the client terminals from 3-1 to 3-n. The data accompanying the request to print offline will be described later with reference to FIG. 3.

The print language identification unit 17 identifies the language setting of the web browser on the client terminal based on "language setting of web browser" included in the data accompanying the request to print offline sent from the client terminal and configures print language used in printing in response to the request to print offline. The print language identification unit 17 corresponds to a browser language information acquisition unit and a print language configuration unit in the present invention.

The print information acquisition unit 18 acquires values of print items identified by the print item identification unit 16 from the internal configuration data 13. The print data generator 19 generates print data from the values of the print items acquired by the print information acquisition unit 18. The print information acquisition unit 18 and the print data generator 19 correspond to an offline printing data acquisition unit in the present invention.

It should be noted that, in the description shown below, the client terminals from 3-1 to 3-n are referred to collectively as client terminal 3 and the web browsers from 31-1 to 31-n are referred to collectively as a web browser 31 except when it is necessary to distinguish them.

FIG 3 is a diagram illustrating a data format in accordance with the request to print offline. As shown in FIG. 3, data format of a request to print offline sent from the client terminal 3 via the UI is comprised of "language setting of web browser" and "type of offline printing". In the example of FIG. 3, "language setting of web browser" is "Japanese", and "type of offline printing" is "printer configuration".

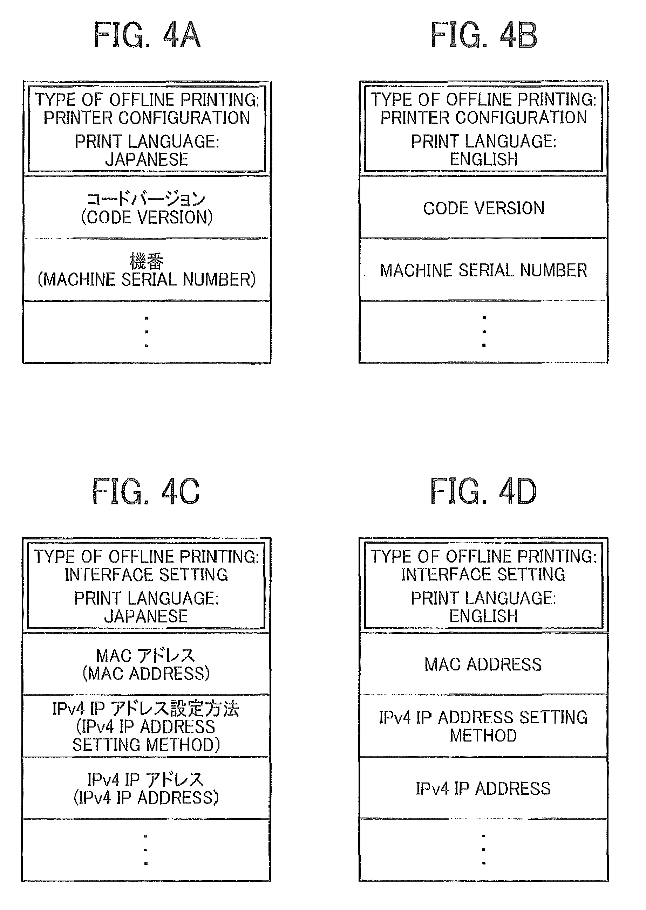

FIGS. 4A, 4B, 4C, and 4D are diagrams illustrating print item lists. In FIG. 4A, "type of offline printing" is "printer configuration", and "print language" is "Japanese". In FIG. 4B, "type of offline printing" is "printer configuration", and "print language" is "English". In FIG 4C, "type of offline printing" is "interface configuration", and "print language" is "Japanese". In FIG. 4D, "type of offline printing" is "interface configuration", and "print language" is "English".

As shown in FIGS. 4A, 4B, 4C, and 4D, item names of configuration values to be printed are enumerated for each of "type of offline printing" and "print language". That is, examples of "printer configuration" are "code version" and "machine serial number". Examples of "interface configuration" are "MAC address", "IPv4 address setting method", and "IPv4 IP address".

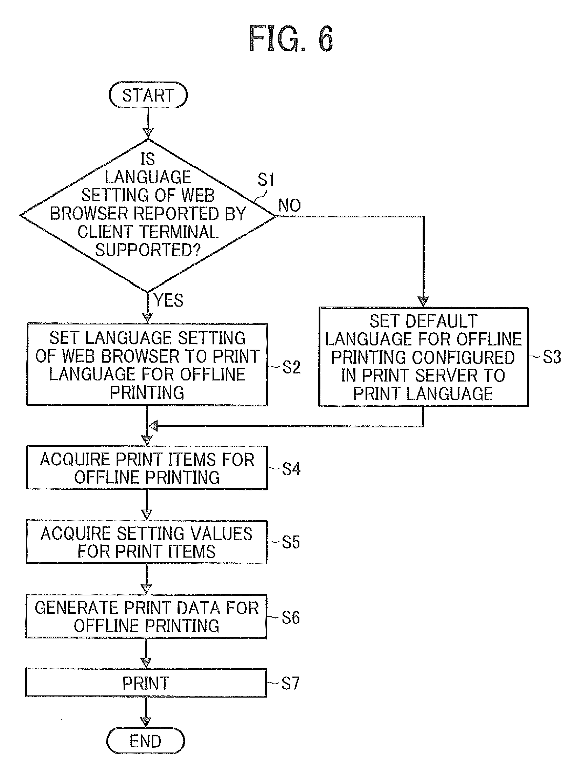

FIG. 6 is a flowchart illustrating a process of printing offline The process starts when the print server 1 receives the request to print offline from the client terminal 3.

After starting the process of printing offline, the print language identification unit 17 determines whether or not the language setting of the web browser reported by the request to print offline sent from the client terminal 3 is supported by offline printing in S1. Here, "the language setting of the web browser reported by the request to print offline sent from the client terminal 3" is "language setting of web browser" included in the data accompanying the request to print offline (shown in FIG. 3).

After the above-described determination, if it is determined that the language setting of the web browser reported by the request to print offline sent from the client terminal 3 is supported by offline printing (YES in S1), the print language identification unit 17 configures the language setting of the web browser 31 as the print language for offline printing in S2. Alternatively, if the language setting of the web browser reported by the request to print offline sent from the client terminal 3 is not supported by offline printing (NO in S1), the print language identification unit 17 configures a default language for offline printing preset in the print server 1 as the print language for offline printing in S3.

After setting the print language, the print item identification unit 16 identifies the type of offline printing specified in the request to print offline sent from the client terminal 3 and acquires a print item for offline printing from the print item list 12 in S4. Here, "type of offline printing specified in the request to print offline" is "type of offline printing" included in the data accompanying the request to print offline, and is read in accordance with the specified type of offline printing and the print language configured in S2 or S3 from the print item list 12 stored for each type of offline printing and supported language.

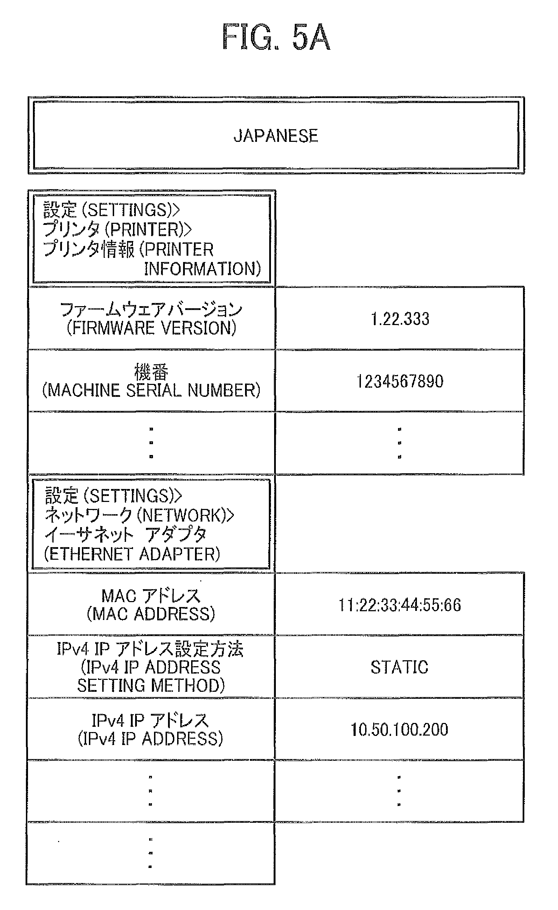

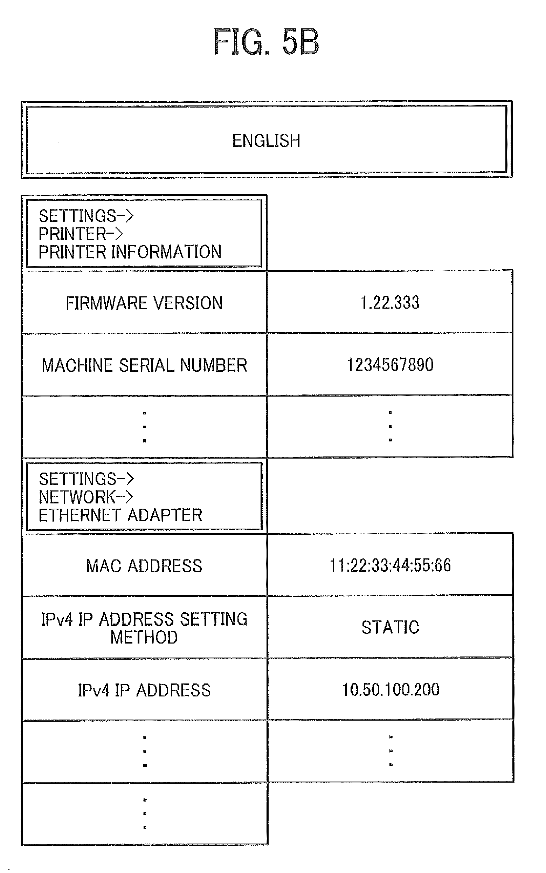

Next, for each print item acquired in S4, the print information acquisition unit 18 acquires configuration values from the internal configuration data 13 in S5. As described with reference to FIG. 5 above, the configuration values are stored in the internal configuration data 13 for each supported language, and are acquired in accordance with the print language configured in S2 or S3.

Next, the print data generator 19 generates print data using the print item acquired in S4 and the value of the print item acquired in S5 in S6. Lastly, the print processor 14 converts the print data generated by the print data generator 19 into bitmap data, sends it to the printer 4, and has the printer 4 execute printing.

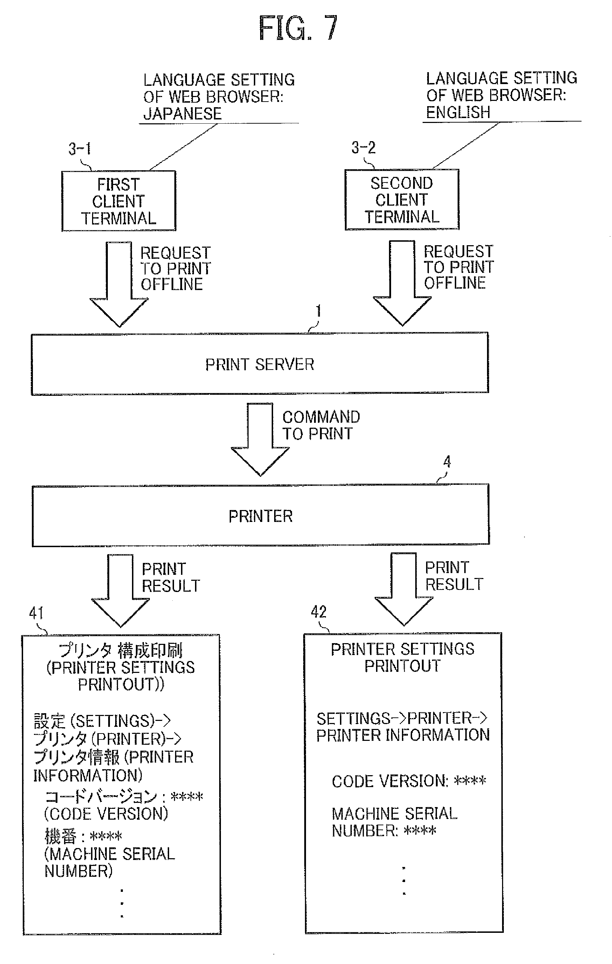

FIG. 7 is a diagram illustrating a result of printing offline. In the left side of FIG. 7, the user of the first client terminal 3-1 whose "language setting of web browser" is "Japanese" specifies "printer configuration" as "type of offline printing". In the right side of FIG. 7, the user of the second client terminal 3-2 whose "language setting of web browser" is "English" specifies "printer configuration" as "type of offline printing".

After receiving the request to print offline from the first client terminal 3-1, the print server 1 executes the process shown in FIG. 6. Consequently, a printout 41 comprised of information "Japanese" and "printer configuration" is output from the printer 4. Alternatively, after receiving the request to print offline from the second client terminal 3-2, the print server 1 executes the process shown in FIG. 6. Consequently, a printout 42 comprised of information "English" and "printer configuration" is output from the printer 4.

As described above, with the print server 1 as the print processing apparatus in this embodiment, the user configures the print language of offline printing based on the configurable language setting of the web browser 31 in the client terminal 3. Consequently, the user can easily configure the print language of offline printing as intended.

That is, web browsers typically support multiple languages. Therefore, it is unnecessary to install an additional package, etc,. to change the language setting in contrast with changing the language setting of the OS. Also, in case of changing the display language of the web browser, only the display language of accessed web pages is changed, and the language of a title bar and tool bar is not changed. Therefore, extent of changing the language setting on the using terminal can be limited compared to changing the language setting of the OS resulting in changing all functional language settings.

Consequently, in case of moving to another country bringing the user's own mobile terminal as the client terminal 3 and printing in that country's language, the user can perform offline printing in that country's language by changing the language setting of the web browser 31 to that country's language. Conversely, in case of performing offline printing by operating the client terminal 3 located in a foreign country, the user can perform offline printing in the user's native language by changing the language setting of the web browser 31 to the user's native language.

In this embodiment described above, internal configuration data stored in the print server 1 is taken as an example of a target of offline printing. Similarly, management data (management report) stored in the print server 1 can be printed in the same way.

In addition, in the present invention, data stored outside of the print server 1 (e.g., a file stored in a file server that stores multilingual files connected to the network 2) can be a target of offline printing. In this case, after receiving the request to print an intended file on the file server offline from the client terminal 3, the print server 1 determines the language setting of the web browser 31, downloads a file in the set language from the file server, and has the printer 4 execute printing.

Numerous additional modifications and variations are possible in light of the above teachings. It is therefore to be understood that, within the scope of the appended claims, the disclosure of this patent specification may be practiced otherwise than as specifically described herein.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

## Claims

1. A print processing apparatus (1), comprising:
a browser language information acquisition unit (17) to acquire browser language information that indicates a language set on a web browser (31) installed on an external apparatus (3) in response to a request to print offline received from the external apparatus (3); and
a print language configuration unit (17) to configure a print language used in printing to be performed in response to the request to print offline based on the acquired browser language information.

2. The print processing apparatus (1) according to claim 1, further comprising an offline printing data acquisition unit (18, 19) to acquire data for offline printing in the print language configured by the print language configuration unit (17).

3. The print processing apparatus (1) according to claim 1, wherein the print language configuration unit (17) configures a default language as the print language when the set language indicated by the browser language information is unsupported.

4. The print processing apparatus (1) according to claim 1, wherein the browser language information acquisition unit (17) acquires the browser language information from data that is sent together with the request to print offline.

5. The print processing apparatus (1) according to claim 2, further comprising a print item identification unit (16) to identify an item to be printed offline from data that is sent together with the request to print offline,
wherein the offline printing data acquisition unit (18, 19) acquires offline printing data of an item identified by the print item identification unit (16).

6. The print processing apparatus (1) according to claim 5, wherein the item to be printed offline is internal configuration data stored in the print processing apparatus.

7. A print processing system, comprising:
the print processing apparatus according to claim 1;
a printer; and
an external apparatus connected via a network.

8. A print processing method executed by a print processing apparatus (1) that has a printer (4) execute printing in response to a request to print sent from an external apparatus (3) connected via a network (2), comprising the steps of:
acquiring browser language information that indicates a language set on a web browser (31) installed on the external apparatus (3) in response to a request to print offline from the external apparatus (3); and
configuring a print language used in printing to be performed in response to the request to print offline based on the acquired browser language information.

9. A carrier means carrying computer readable code for controlling a computer to carry out the print processing method of claim 8.
